# EUROPÄISCHE PATENTSCHRIFT

(11) **EP 3 617 096 B1**
(45) Veröffentlichungstag und Bekanntmachung des Hinweises auf die Patenterteilung: **15.11.2023**
(21) Anmeldenummer: 19191974.5
(22) Anmeldetag: 15.08.2019
(51) Int. Cl.: B65G 1/04

(54) **LAGERSYSTEM ZUM LAGERN VON BEHÄLTERN**
STORAGE SYSTEM FOR STORING CONTAINERS
SYSTÈME DE STOCKAGE PERMETTANT DE STOCKER DES RÉCIPIENT

(30) Priorität: 22.08.2018 DE 102018214214
(43) Veröffentlichungstag der Anmeldung: 04.03.2020
(60) Teilanmeldung: 23160458.8
(73) Patentinhaber: Gebhardt Fördertechnik GmbH, D-74889 Sinsheim (DE)
(72) Erfinder: Eder, Rudolf, 74869 Schwarzach (DE); Gebhardt, Marco, 74889 Sinsheim (DE); Eder, Jörg, 67661 Kaiserslautern (DE)
(74) Vertreter: Ullrich & Naumann PartG mbB

(56) Entgegenhaltungen:
- WO-A1-2014/075937
- WO-A1-2016/198467
- WO-A1-2017/121515
- WO-A1-2019/001816
- WO-A1-2019/141877

## Beschreibung

Die Erfindung betrifft ein Lagersystem zum Lagern von Behältern, mit einer Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Lagerbehältern aufzunehmen, mit mindestens einem zur Fortbewegung auf der Gitterstruktur ausgebildeten Transportroboter zur Handhabung der Lagerbehälter, wobei der Transportroboter Mittel zum Aufnehmen, Transportieren und Absetzen von in der Behälter-Lagerstruktur gelagerten Lagerbehältern umfasst, sowie mit mindestens einer Lagerbehälter-Hebevorrichtung mit einer heb- und senkbaren Hub-Plattform zum vertikalen Befördern von Lagerb.ehältern.

Lagersysteme der in Rede stehenden Art sind seit Jahren aus der Praxis bekannt. Generell handelt es sich bei derartigen Lagersysteme um dreidimensional strukturierte Warenlager, in der sich bis zu einer bestimmten Höhe übereinander gestapelte Lagerplätze für kistenförmige Behälter (in der einschlägigen englischsprachigen Literatur üblicherweise als "bins" bezeichnet) befinden. Die Lagerstruktur wird dabei durch ein üblicherweise in Leichtbauweise gefertigtes Gerüst definiert, dessen oberer Abschluss durch ein gitterförmiges Schienensystem gebildet wird. Durch die Gerüststreben sind in einer Längsrichtung und in einer Querrichtung benachbart zueinander angeordnete Lagersäulen gebildet, in denen die Lagerbehälter vertikal übereinandergestapelt werden können.

Eine Anzahl von Transportrobotern ist auf den oberen Schienen angeordnet und kann sich horizontal auf der Gitterstruktur bewegen. Jeder Transportroboter ist mit einem Lift zum Aufnehmen, Transportieren und Platzieren von Lagerbehältern ausgestattet, die in der Behälter-Lagerstruktur gelagert sind.

Die in Rede stehenden Lagersysteme umfassen zudem einen oder üblicherweise mehrere Arbeitsplätze, die als Kommissionier- und/oder Beladestationen ausgebildet sind und von denen aus das jeweilige Lagersystem bedient werden kann. Die Arbeitsplätze sind im Allgemeinen auf Bodenniveau (entsprechend einer untersten Ebene der Behälter-Lagerstruktur) seitlich an das Lagersystem angegliedert.

Wenn ein in einem bestimmten Lagerbehälter gelagerter Produktartikel aus der Behälter-Lagerstruktur entnommen werden soll, z.B. zur Kommissionierung, wird ein Transportroboter so gesteuert, dass er den jeweiligen Lagerbehälter aus der Behälter-Lagerstruktur aufnimmt und den Lagerbehälter auf der Gitterstruktur zu einer Gitterzelle transportiert, welche mit einem Arbeitsplatz über eine nicht mit Lagerbehältern belegte, d.h. freie, Lagersäule kommuniziert. Dort wird der Lagerbehälter mittels des Lifts des Transportroboters durch die freie Lagersäule hinab zu dem Arbeitsplatz befördert, wo sodann der benötigte Produktartikel aus dem Lagerbehälter entnommen werden kann.

Bei einem in die Behälter-Lagerstruktur einzulagernden Lagerbehälter läuft der beschriebene Prozess umgekehrt ab.

In beiden Fällen, d.h. sowohl bei der Auslagerung als auch bei der Einlagerung, erweist es sich als nachteilig, dass der vertikale Transport der Lagerbehälter mittels der Lifte der Transportroboter zwischen Arbeitsplatz und Gitterstruktur relativ zeitintensiv ist. Die Zeit, die ein Transportroboter für den Hub eines Behälters benötigt, ist insofern verschwendet, als dass ein Transportroboter erst nach Beendigung des Hubvorgangs mit einem nächsten Auftrag beginnen kann und ein Kommissionierer an einem Arbeitsplatz auf den jeweiligen nächsten Behälter warten muss. Dies steht einer effizienten und leistungsstarken Lagerbedienung entgegen.

Zur Leistungssteigerung sind bereits Lagersysteme vorgeschlagen worden, bei denen spezielle Lagerbehälter-Hebevorrichtungen zum Einsatz kommen, die den einzelnen Arbeitsplätzen zuarbeiten. Ein solches System ist beispielsweise in der WO 2018/069282 A1 beschrieben. Danach umfasst ein Arbeitsplatz eine erste Lagerbehälter-Hebevorrichtung und eine zweite Lagerbehälter-Hebevorrichtung, wobei die beiden Lagerbehälter-Hebevorrichtungen auf Arbeitsplatzniveau über eine Fördereinrichtung miteinander verbunden sind. Die erste Lagerbehälter-Hebevorrichtung befördert Lagerbehälter von oberhalb der Gitterstruktur auf Arbeitsplatzniveau. Dort wird der Lagerbehälter auf die Fördereinrichtung übergeben, welche den Lagerbehälter zu einer Bedienstation und von dort zu der zweiten Lagerbehälter-Hebevorrichtung befördert. Die zweite Lagerbehälter-Hebevorrichtung hebt den Lagerbehälter wieder zurück auf das Niveau der Gitterstruktur.

Das bekannte Lagersystem erreicht eine Leistungssteigerung insoweit, als dass die Arbeit der Transportroboter unabhängig von den Lagerbehälter-Hubvorgängen ist, d.h. ein Transportroboter kann direkt nach der Übergabe eines Lagerbehälters an die erste Lagerbehälter-Hebevorrichtung bereits mit der Bearbeitung eines nachfolgenden Auftrags beginnen. Allerdings erweist sich die Art und Weise der Durchführung der Hubvorgänge im Hinblick auf eine effiziente Handhabung der Lagerbehälter als nachteilig. Zudem ist das System in baulicher Hinsicht aufwendig.

Aus der WO 2016/198467 A1 ist ein Lagersystem mit einer Gitterstruktur und einer unterhalb der Gitterstruktur angeordneten Behälter-Lagerstruktur bekannt, wobei das Lagersystem einen Lager- und Sequenzierungsbereich mit einer modifizierten Behälter-Lagerstruktur aufweist, die einen seitlichen Zugang zu Containern eines Stapels der Behälter-Lagerstruktur ermöglicht. An diesen Bereich angrenzend ist eine Lagerbehälter-Hebevorrichtung mit einer heb- und senkbaren Hub-Plattform zum vertikalen Befördern von Lagerbehältern vorgesehen. Die Hubplattform verfügt über einen Mechanismus zum Lösen eines Ziel-Containers von den oberhalb des Ziel-Containers in dem jeweiligen Stapel der Behälter-Lagerstruktur gelagerten Containern. In diesem Zusammenhang ist konkret vorgesehen, dass die oberhalb eines Ziel-Containers gelagerten Container angehoben werden, während die unterhalb des Ziel-Containers gelagerten Container in Position gehalten werden.

Die WO 2019/001816 A1 offenbart ein Lagersystem zum Lagern von Behältern, umfassend: eine Gitterstruktur mit einer Vielzahl von Gitterzellen, wobei jede Gitterzelle eine Lagersäule einer unterhalb der Gitterstruktur angeordneten Behälter-Lagerstruktur definiert, wobei die Lagersäulen eingerichtet sind, jeweils einen vertikalen Stapel von Lagerbehältern aufzunehmen, mindestens einen zur Fortbewegung auf der Gitterstruktur ausgebildeten Transportroboter zur Handhabung der Lagerbehälter, wobei der Transportroboter Mittel zum Aufnehmen, Transportieren und Absetzen von in der Behälter-Lagerstruktur gelagerten Lagerbehältern umfasst, sowie mindestens eine Lagerbehälter-Hebevorrichtung mit einer heb- und senkbaren Hub-Plattform zum vertikalen Befördern von Lagerbehältern, mindestens eine Arbeitsplatz-Ebene mit einem als Beladestation und/oder als Kommissionierstation ausgeführten Arbeitsplatz und mindestens eine Übergabe-Ebene zur Übergabe von Lagerbehältern von der Behälter-Lagerstruktur an die Lagerbehälter-Hebevorrichtung sowie von der Lagerbehälter-Hebevorrichtung an die Behälter-Lagerstruktur, wobei die Lagerbehälter-Hebevorrichtung die Arbeitsplatz-Ebene mit der Übergabe-Ebene verbindet und wobei die Hub-Plattform eingerichtet ist, in einer Halteposition auf der mindestens einen Übergabe-Ebene einerseits beförderte Lagerbehälter abzugeben oder andererseits zu befördernde Lagerbehälter aufzunehmen, wobei auf der mindestens einen Übergabe-Ebene Fördereinrichtungen vorgesehen sind, die zur Aufnahme von Lagerbehältern von der Lagerbehälter-Hebevorrichtung oder zur Abgabe von Lagerbehältern an die Lagerbehälter-Hebevorrichtung ausgeführt sind.

Der vorliegenden Erfindung liegt die Aufgabe zugrunde, ein Lagersystem der eingangs genannten Art derart auszugestalten und weiterzubilden, dass mit in konstruktiver Hinsicht möglichst einfachen Mitteln eine effiziente Handhabung der Lagerbehälter ermöglicht ist.

Erfindungsgemäß wird die voranstehende Aufgabe durch die Merkmale des Anspruchs 1 gelöst.

In erfindungsgemäßer Weise ist zunächst erkannt worden, dass die Transportroboter unter Leistungsgesichtspunkten für einen Vertikaltransport der Lagerbehälter ungeeignet sind, da zum einen die Lifte konstruktionsbedingt relativ langsam arbeiten und zum anderen die Transportroboter während der Dauer der Vertikaltransporte für ihre eigentlichen Aufgaben nicht zur Verfügung stehen. Erfindungsgemäß wird daher der Einsatz einer Lagerbehälter-Hebevorrichtung vorgeschlagen, die eigens für die Bewerkstelligung der Vertikaltransporte von Lagerbehältern vorgesehen ist, so dass insoweit Abhängigkeiten beseitigt und eine Entkopplung von den Transportrobotern stattfindet. Ein Arbeitsplatz ist somit effektiver nutzbar, da er nicht so lange von ein und demselben Transportroboter blockiert wird. Wenn der Transportroboter bzw. dann auch der Lagerbehälter schneller ausgetauscht werden kann, kann der Durchsatz entsprechend gesteigert werden.

In weiter erfindungsgemäßer Weise ist die mindestens eine Lagerbehälter-Hebevorrichtung derart ausgeführt, dass sie eine heb- und senkbare Hub-Plattform zum vertikalen Befördern von Lagerbehältern umfasst. Die Hub-Plattform ist dabei eingerichtet, in einer Halteposition einerseits beförderte Lagerbehälter abzugeben und andererseits zu befördernde Lagerbehälter aufzunehmen. Durch diese Ausgestaltung wird erfindungsgemäß erreicht, dass Leerfahrten der Lagerbehälter-Hebevorrichtung effektiv verhindert werden. Mithin findet eine Parallelisierung von Arbeitsvorgängen statt, da die Lagerbehälter-Hebevorrichtung konfiguriert ist, an einer Halteposition, bspw. auf einer Arbeitsplatz-Ebene, einen oder mehrere (abwärts) beförderte Lagerbehälter auszugeben und für einen sich anschließenden Vertikaltransport, bspw. zur oberen Gitterebene des Lagersystems, direkt die nächsten (aufwärts) zu befördernden Lagerbehälter aufzunehmen. Im Ergebnis ist somit eine effizientere Handhabung der Lagerbehälter ermöglicht, was wiederum eine Leistungssteigerung im Hinblick auf den Betrieb des Lagersystems zur Folge hat. Neben der hohen Leistung besteht ein weiterer Vorteil des erfindungsgemäßen Lagersystems in seiner konstruktiv einfachen Bauweise, da für den Aufwärts- bzw. Abwärtstransport nicht getrennte Lagerbehälter-Hebevorrichtungen zum Einsatz kommen, sondern beide Vorgänge mit ein und derselben Lagerbehälter-Hebevorrichtung durchgeführt werden können.

In erfindungsgemäßer Weise umfasst das Lagersystem mindestens eine Arbeitsplatz-Ebene mit einem als Beladestation und/oder als Kommissionierstation ausgeführten Arbeitsplatz, und mindestens eine Übergabe-Ebene zur Übergabe von Lagerbehältern von der Behälter-Lagerstruktur an die Lagerbehälter-Hebevorrichtung sowie von der Lagerbehälter-Hebevorrichtung an die Behälter-Lagerstruktur. Erfindungsgemäß ist die Hub-Plattform eingerichtet, in einer Halteposition auf der mindestens einen Übergabe-Ebene einerseits beförderte Lagerbehälter abzugeben und andererseits zu befördernde Lagerbehälter aufzunehmen. Üblicherweise wird es sich bei der Übergabe-Ebene um die oberste Lagerebene der Behälter-Lagerstruktur handeln, von wo die Transportroboter die besonders einfach und schnell übernehmen können. Es sind jedoch auch andere Übergabe-Ebenen denkbar, wie weiter unten im Detail beschrieben wird. in jedem Fall dient die Lagerbehälter-Hebevorrichtung als Schnittstelle, welche die Arbeitsplatz-Ebene mit der Übergabeplatz-Ebene verbindet.

Zur Realisierung einer effektiven, flexiblen und reibungslosen Übergabe von Lagerbehältern, sowohl von der Lagerbehälter-Hebevorrichtung an die Behälter-Lagerstruktur als auch umgekehrt von der Behälter-Lagerstruktur an die Lagerbehälter-Hebevorrichtung, sind in erfindungsgemäßer Weise auf den jeweiligen Übergabe-Ebenen andienende Fördereinrichtungen vorgesehen. Diese Fördereinrichtungen können jeweils eine fest vorgegebene Förderrichtung haben, sodass eine Fördereinrichtung entweder zu der entsprechenden Lagerbehälter-Hebevorrichtung hin fördert oder von der entsprechenden Lagerbehälter-Hebevorrichtung weg fördert. Im Hinblick auf ein hohes Maß an Flexibilität können die Fördereinrichtung auch umkehrbar einstellbare Förderrichtungen aufweisen. Transportroboter können Lagerbehälter auf den jeweiligen Fördereinrichtungen abstellen (zum Abtransport durch die Lagerbehälter-Hebevorrichtung) oder Lagerbehälter von den jeweiligen Fördereinrichtungen aufnehmen (nach deren Anlieferung durch die Lagerbehälter-Hebevorrichtung).

Gemäß einer vorteilhaften Ausgestaltung kann die Lagerbehälter-Hebevorrichtung an einer Außenseite der Behälter-Lagerstruktur angeordnet sein. Eine derartige Ausgestaltung bietet den Vorteil, dass die Transportroboter auf der Gitterstruktur ungestört operieren können, d.h. nahezu sämtliche Gitterzellen ohne Umwege ansteuern können. Im Rahmen einer derartigen Ausgestaltung lassen sich zudem Arbeitsplätze in besonders einfacher Weise integrieren, nämlich auf Bodenniveau unmittelbar an eine Außenseite der Behälter-Lagerstruktur angegliedert.

Gemäß einer alternativen Ausgestaltung könnte die Lagerbehälter-Hebevorrichtung auch im Inneren der Behälter-Lagerstruktur angeordnet ist. Dies ginge zwar zu Lasten der zur Verfügung stehenden Lagerkapazität, da im Inneren der Behälter-Lagerstruktur Lagerplätze verloren gehen, hätte allerdings den Vorteil, dass die Lagerbehälter-Hebevorrichtung von allen Gitterzellen aus ohne längere Fahrstrecken für die Transportroboter gut zu erreichen wäre. Zudem könnte die Lagerbehälter-Hebevorrichtung von den Transportrobotern von mehreren Seiten aus angefahren werden.

In Bezug auf die Positionierung von Arbeitsplätzen kann bei einer derartigen Ausgestaltung vorgesehen sein, dass sich diese unterhalb eines Podests oder einer Zwischendecke befinden, auf dem/der die Behälter-Lagerstruktur aufgebaut ist. In dem Podest oder der Zwischendecke müssten entsprechende Durchgänge für die Lagerbehälter-Hebevorrichtung vorgesehen werden. Denkbar wäre auch, dass sich die Arbeitsplätze in einem innerhalb der Behälter-Lagerstruktur ausgebildeten Tunnel befinden, wobei die Lagerbehälter-Hebevorrichtungen als Schnittstellen zwischen den Tunnel-Arbeitsplätzen und der Gitterstruktur fungieren.

Im Hinblick auf einen besonders hohen Effizienzgrad kann vorgesehen sein, dass die Hub-Plattform einer Lagerbehälter-Hebevorrichtung eine erste Fördereinrichtung und eine zweite Fördereinrichtung aufweist, wobei für die erste und die zweite Fördereinrichtung gegenläufige Förderrichtungen einstellbar sind, derart, dass eine der Fördereinrichtungen zur Aufnahme und die jeweilige andere der Fördereinrichtungen zur Abgabe von Lagerbehältern eingerichtet ist. Damit ließen sich mit der Lagerbehälter-Hebevorrichtung "Doppelspiele" fahren, wonach bspw. auf Arbeitsplatzebene ein auszulagernder Lagerbehälter von der ersten Fördereinrichtung der Lagerbehälter-Hebevorrichtung ausgegeben wird, während gleichzeitig ein einzulagernder Lagerbehälter von der zweiten Fördereinrichtung der Lagerbehälter-Hebevorrichtung aufgenommen wird. Nach einem Hubvorgang auf die Ebene der Gitterstruktur könnte der einzulagernder Lagerbehälter von der zweiten Fördereinrichtung der Lagerbehälter-Hebevorrichtung ausgegeben und gleichzeitig wieder ein auszulagernder Lagerbehälter von der ersten Fördereinrichtung der Lagerbehälter-Hebevorrichtung aufgenommen werden.

In einer vorteilhaften Ausgestaltung sind die erste Fördereinrichtung und die zweite Fördereinrichtung derart ausgeführt, dass sie jeweils Platz für zwei oder mehrere in Förderrichtung hintereinander angeordnete Lagerbehälter bieten. Hierdurch wäre ein flexibler Betrieb ermöglicht, der den jeweils aktuellen Leistungsanforderungen angepasst werden kann.

Grundsätzlich baut eine Lagerbehälter-Hebevorrichtung umso größer, je mehr Lagerbehälter von der Lagerbehälter-Hebevorrichtung aufgenommen und pro Hub befördert werden können. Entsprechend der Baugröße der Lagerbehälter-Hebevorrichtung gehen innerhalb der Behälter-Lagerstruktur Lagerplatz verloren. Dem kann in vorteilhafter Weise mittels einer Ausgestaltung entgegengewirkt werden, bei der die Hub-Plattform doppelstöckig ausgeführt ist. Im Konkreten könnte die Hub-Plattform eine untere Ebene aufweisen, der bspw. die erste Fördereinrichtung zugeordnet ist, sowie eine obere Ebene, welcher die zweite Fördereinrichtung zugeordnet ist. Dementsprechend könnten bspw. über die untere Ebene der Hub-Plattform Einlagerungen von Lagerbehältern und über die obere Ebene der Hub-Plattform Auslagerungen von Lagerbehältern abgewickelt werden.

Wie oben bereits erwähnt könnte die mindestens eine Übergabe-Ebene, auf der eine Übergabe von Lagerbehältern von der Behälter-Lagerstruktur an die Lagerbehälter-Hebevorrichtung sowie von der Lagerbehälter-Hebevorrichtung an die Behälter-Lagerstruktur, stattfindet unmittelbar unterhalb der Gitterstruktur angeordnet sein, d.h. in einer Ebene entsprechend der obersten Lagerebene der Behälter-Lagerstruktur. Die Hubwege für die Lifte der Transportroboter zur Aufnahme bzw. Abgabe von Lagerbehältern sind somit minimiert, so dass Übergaben besonders schnell realisiert werden können.

Im Rahmen einer alternativen Ausgestaltung könnte eine Übergabe-Ebene auch in einer tiefer liegenden Ebene als die oberste Lagerebene der Lagerstruktur angeordnet sein. Durch eine derartige tiefere Position der Übergabe-Ebene bietet sich die bauliche Möglichkeit, die Lagerbehälter-Hebevorrichtung derart auszuführen, dass der Heberkopf bzw. der obere Abschluss der Lagerbehälter-Hebevorrichtung unterhalb der Gitterstruktur liegt. Mit anderen Worten liegt die Lagerbehälter-Hebevorrichtung vollständig unterhalb der Gitterstruktur und ragt nicht über diese hinaus. Dementsprechend steht den Transportrobotern die gesamte Gitterstruktur als Arbeitsfläche zur Verfügung. Dieser Vorteil der freien Beweglichkeit der Transportroboter ist geeignet, die durch die tiefere Position der Übergabe-Ebene bedingten längeren Hubwege der Lifte der Transportroboter zur Aufnahme bzw. Abgabe von Lagerbehältern zu kompensieren oder unter bestimmten Betriebsbedingungen sogar zu überkompensieren.

Im Hinblick auf eine Minimierung von Lagerplatzverlusten kann eine doppelstöckig ausgeführte Übergabe-Ebene vorgesehen sein. Dies bedeutet, dass die Übergabe-Ebene eine untere Ebene und eine obere Ebene aufweist, wobei eine der Ebenen zur Übergabe von Lagerbehältern von der Behälter-Lagerstruktur an die Lagerbehälter-Hebevorrichtung und die jeweils andere der Ebenen zur Übergabe von Lagerbehältern von der Lagerbehälter-Hebevorrichtung an die Behälter-Lagerstruktur eingerichtet sind. Durch die doppelstöckige Anordnung ist es möglich, Einlagerungen und Auslagerungen auf ein und derselben Seite einer Lagerbehälter-Hebevorrichtung abzuwickeln. Dies geschieht ohne nennenswerten Leistungsverlust gegenüber einer entsprechenden Anordnung, bei der Einlagerungen und Auslagerungen auf einander gegenüberliegenden Seiten einer Lagerbehälter-Hebevorrichtung abgewickelt werden, allerdings mit dem Vorteil, dass nur einseitig Lagerplätze geopfert werden müssen.

In einer vorteilhaften Ausführungsform können die andienende Fördereinrichtungen, auf Kosten der Lagerkapazität, beidseits der Lagerbehälter-Hebevorrichtung vorgesehen sein, um so bei Bedarf eine höhere Leistung zu erzielen. Konkret könnten bspw. insgesamt vier andienende Fördereinrichtungen vorgesehen sind, die paarweise auf jeweils gegenüberliegenden Seiten der Lagerbehälter-Hebevorrichtung angeordnet sind. Zur Vereinfachung der Übergabe von Lagerbehältern kann vorgesehen sein, dass andienenden Fördereinrichtungen, die jeweils auf derselben Seite einer Lagerbehälter-Hebevorrichtung angeordnet sind, über eine zusätzliche quer verlaufende Fördereinrichtung miteinander in Verbindung stehen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer perspektivischen Ansicht ein Lagersystem mit zwei seitlich integrierten Lagerbehälter-Hebevorrichtungen gemäß einem Ausführungsbeispiel der Erfindung,
- Fig. 2: in einer perspektivischen Ansicht ein Lagersystem mit zwei seitlich beabstandet angegliederten Lagerbehälter-Hebevorrichtungen gemäß einem Ausführungsbeispiel der Erfindung,
- Fig. 3: in einer geschnittenen Seitenansicht ein Lagersystem mit einer Lagerbehälter-Hebevorrichtung zu einem in einem Tunnel innerhalb der Behälter-Lagerstruktur angeordneten Arbeitsplatz gemäß einem Ausführungsbeispiel der Erfindung,
- Fig. 4: in einer geschnittenen Seitenansicht ein Lagersystem mit einer Lagerbehälter-Hebevorrichtung zu einem unterhalb der Behälter-Lagerstruktur angeordneten Arbeitsplatz gemäß einem Ausführungsbeispiel der Erfindung,
- Fig. 5: in einer perspektivischen Schnittdarstellung das Lagersystem gemäß Fig. 4,
- Fig. 6: in einer schematischen Draufsicht das Lagersystem gemäß den Fig. 4 und 5,
- Fig. 7: in einer perspektivischen Schnittdarstellung ein Lagersystem mit einer oberen Übergabe-Ebene gemäß einem alternativen Ausführungsbeispiel der Erfindung,
- Fig. 8: in einer schematischen Draufsicht das Lagersystem gemäß Fig. 7,
- Fig. 9: in einer perspektivischen Schnittdarstellung ein Lagersystem mit einer oberen Übergabe-Ebene gemäß einem weiteren Ausführungsbeispiel der Erfindung,
- Fig. 10: in einer schematischen Draufsicht das Lagersystem gemäß Fig. 9,
- Fig. 11: in einer perspektivischen Schnittdarstellung ein Lagersystem mit einer oberen Übergabe-Ebene gemäß einem weiteren Ausführungsbeispiel der Erfindung,
- Fig. 12: in einer schematischen Draufsicht das Lagersystem gemäß Fig. 11,
- Fig. 13: in einer geschnittenen Seitenansicht ein Lagersystem mit zwei von einer Lagerbehälter-Hebevorrichtung gleichzeitig bedienten Arbeitsplätzen gemäß einem Ausführungsbeispiel der Erfindung,
- Fig. 14: in einer perspektivischen Schnittdarstellung das Lagersystem gemäß Fig. 13,
- Fig. 15: in einer Draufsicht das Lagersystem gemäß den Fig. 13 und 14,
- Fig. 16-21: in perspektivischen Schnittdarstellungen bzw. Draufsichten Lagersystem mit einer oberen Übergabe-Ebene gemäß weiteren Ausführungsbeispielen der Erfindung,
- Fig. 22: in einer perspektivischen Schnittdarstellung ein Lagersystem mit einer Lagerbehälter-Hebevorrichtung mit einer einzelnen Fördereinrichtung gemäß einem Ausführungsbeispiel der Erfindung,
- Fig. 23: in einer Draufsicht das Lagersystem gemäß Fig. 22,
- Fig. 24: in einer perspektivischen Schnittdarstellung ein Lagersystem mit einer tiefer angeordneten Übergabe-Ebene gemäß einem Ausführungsbeispiel der Erfindung, und
- Fig. 25: in einer geschnittenen Seitenansicht das Lagersystem gemäß Fig. 24.

Grundsätzlich sei angemerkt, dass im Rahmen der nachfolgenden Figurenbeschreibung gleiche Komponenten bzw. gleiche Bauteile in sämtlichen Figuren mit einheitlichen Bezugszeichen versehen sind.

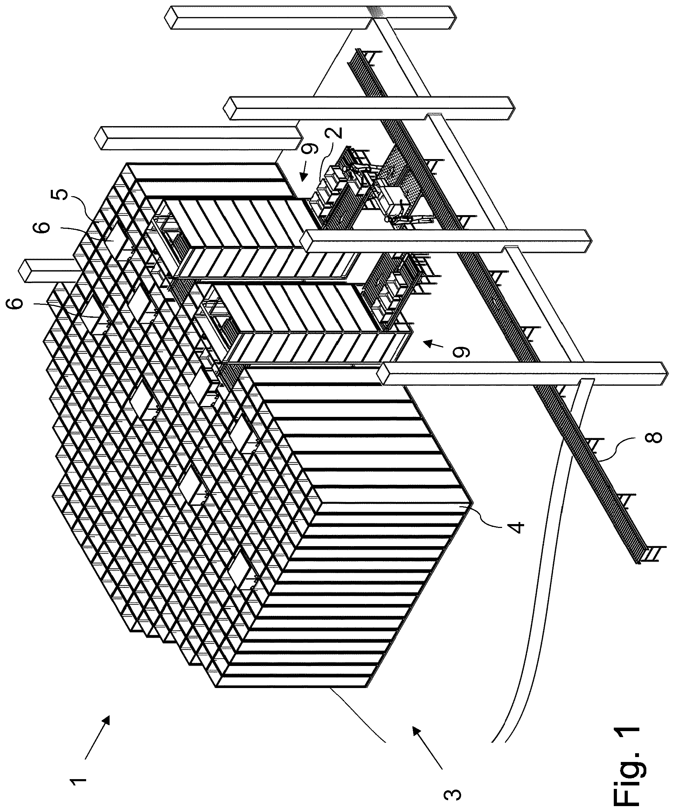

Fig. 1 zeigt - schematisch - in einer perspektivischen Ansicht ein Lagersystem 1 zum Lagern von Lagerbehältern 2 gemäß einem ersten Ausführungsbeispiel der Erfindung. Das Lagersystem 1 ist dreidimensional organisiert und umfasst als Behälter-Lagerstruktur 3 ein in Leichtbauweise gefertigtes Gerüst, welches eine Vielzahl von Lagersäulen 4 definiert. Innerhalb dieser Lagersäulen 4 befinden sich jeweils vertikal übereinander angeordnete Lagerplätze, in denen die Lagerbehälter 2 bis zu einer bestimmten Höhe übereinandergestapelt werden können.

Den oberen Abschluss der Behälter-Lagerstruktur 3 bildet eine als Schienenraster ausgeführte Gitterstruktur 5, auf der eine Anzahl von Transportrobotern 6 zur Bedienung des Lagersystems 1 operieren. Die Gitterstruktur 5 definiert eine Vielzahl von mit den Lagersäulen 4 korrespondierenden Gitterzellen. Die Transportroboter 6, die sich horizontal auf der Gitterstruktur 5 bewegen können, umfassen jeweils einen (in Fig. 1 nicht zu erkennenden) Lift zum Aufnehmen, Transportieren und Platzieren von Lagerbehältern 2, die in der Behälter-Lagerstruktur 3 gelagert sind.

Das Lagersystem 1 umfasst des Weiteren Arbeitsplätze 7, wobei diese als Beladestation und/oder als Kommissionierstation ausgebildet sein können. Wenngleich Lagersysteme der hier in Rede stehenden Art im praktischen Betrieb eine Vielzahl solcher Arbeitsplätze aufweisen, sind aus Gründen der Übersichtlichkeit in Fig. 1 nur zwei Arbeitsplätze 7 dargestellt. Über eine Förderstrecke 8 werden einzulagernden Waren zu den jeweiligen Arbeitsplätzen 7 hin transportiert bzw. auszulagernde oder kommissionierte Waren abtransportiert.

Zwei Lagerbehälter-Hebevorrichtungen 9, die als Schnittstelle zwischen den Arbeitsplätzen 7 und einer oberen Ebene der Behälter-Lagerstruktur 3 fungieren, sind seitlich an eine Außenseite der Behälter-Lagerstruktur 3 angebaut. Die Lagerbehälter-Hebevorrichtungen 9 umfassen jeweils eine (in Fig. 1 nicht zu erkennende) Hub-Plattform 10 und sind eingerichtet, zwischen unterschiedlichen Ebenen des Lagersystems 1 zu vermitteln, indem sie Lagerbehälter 2 in vertikaler Richtung von einer Ebene zu einer anderen Ebene befördern, insbesondere von einem Arbeitsplatz 7 zu einer oberen Ebene der Behälter-Lagerstruktur 3 und umgekehrt. Die genaue Funktionsweise der Lagerbehälter-Hebevorrichtungen 9 wird weiter unten im Detail beschrieben.

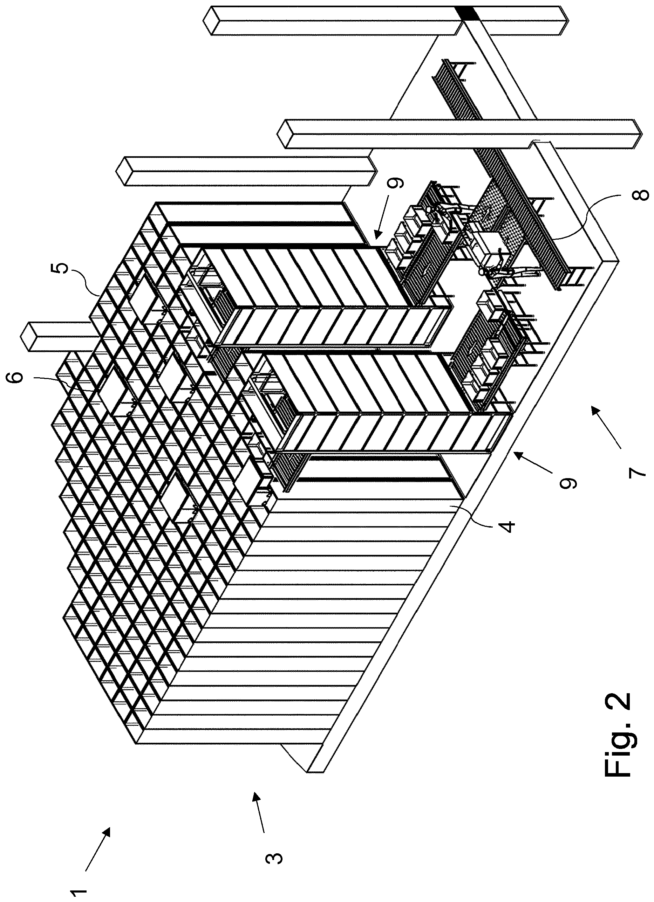

Je nach baulichen Gegebenheiten könnten die Lagerbehälter-Hebevorrichtungen 9 - unter Verlust von Lagerplätzen - auch so weit in die Behälter-Lagerstruktur 3 integriert werden, dass die Außenseiten der Lagerbehälter-Hebevorrichtungen mit der jeweiligen Außenseite der Behälter-Lagerstruktur 3 abschließen. Umgekehrt zeigt Fig. 2 ein ähnliches Lagersystem 1 gemäß einem Ausführungsbeispiel der Erfindung, wobei im Unterschied zu dem Lagersystem 1 nach Fig. 1 die beiden Lagerbehälter-Hebevorrichtungen 9 beabstandet zu der Behälter-Lagerstruktur 3 angeordnet sind, so dass innerhalb der bestehenden Behälter-Lagerstruktur 3 überhaupt keine Lagerplätze verloren gehen. Der Abstand zu der Behälter-Lagerstruktur 3 wird dabei über entsprechende Fördereinrichtungen überbrückt, wie weiter unten im Detail beschrieben wird.

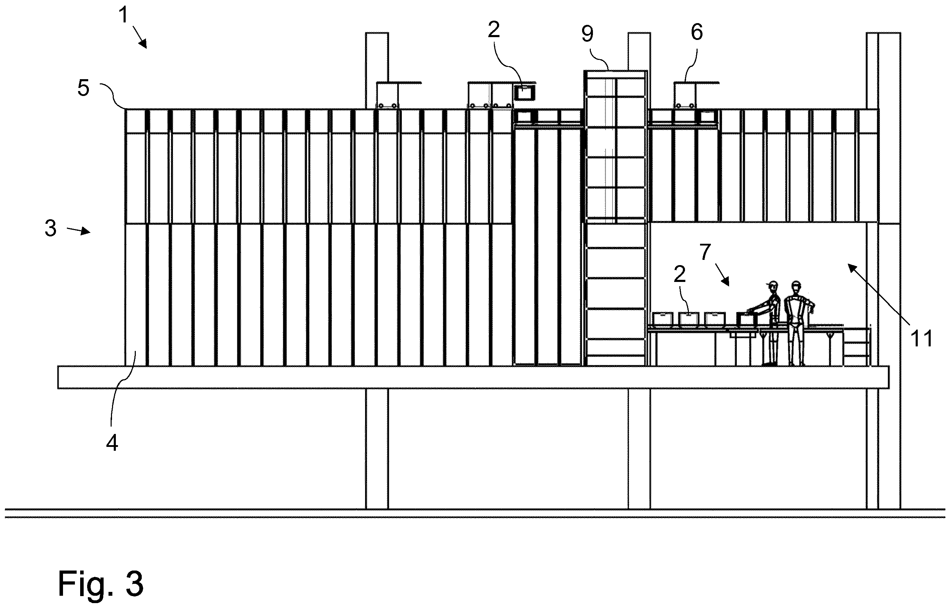

Fig. 3 zeigt ein Lagersystem 1 gemäß einem Ausführungsbeispiel der Erfindung, bei dem ein Arbeitsplatz 7 in einem Freiraum bzw. Tunnel 11 eingerichtet ist, welcher innerhalb der Behälter-Lagerstruktur 3 ausgebildet ist. Auch in diesem Ausführungsbeispiel ist eine Lagerbehälter-Hebevorrichtung 9 vorgesehen, die zur Durchführung von Vertikaltransporten von Lagerbehältern 2 zwischen dem Arbeitsplatz 7 und der obersten Ebene der Behälter-Lagerstruktur 3 eingerichtet ist.

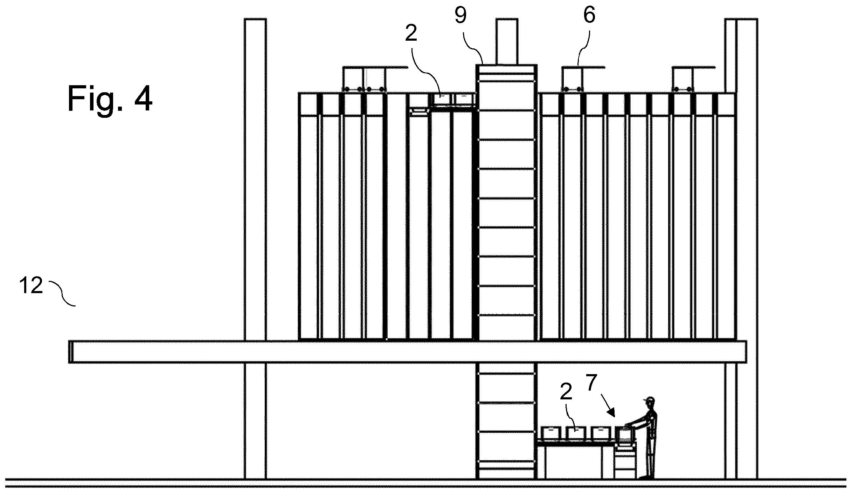

Schließlich zeigt Fig. 4 ein Lagersystem 1 gemäß einem weiteren Ausführungsbeispiel der Erfindung, bei dem die Behälter-Lagerstruktur 3 auf einer Plattform bzw.

Zwischendecke 12 montiert ist, wobei ein Arbeitsplatz 7 in einem Bereich unterhalb der Zwischendecke 12 eingerichtet ist. Für die Lagerbehälter-Hebevorrichtung 9, die, wie im Zusammenhang mit den vorhergehenden Ausführungsbeispielen bereits mehrfach erwähnt, Lagerbehälter 2 in vertikaler Richtung zwischen dem Arbeitsplatz 7 und einer oberen bzw. der obersten Ebene der Behälter-Lagerstruktur 3 befördert, ist ein entsprechender Durchgang in der Zwischendecke 12 ausgebildet.

In ähnlicher Weise wie in Fig. 4 gezeigt, könnte die Lagerbehälter-Hebevorrichtung 9 auch als Schnittstelle zwischen mehreren übereinander angeordneten und jeweils durch Zwischendecken 12 voneinander separierten Behälter-Lagerstrukturen 3 eingesetzt werden.

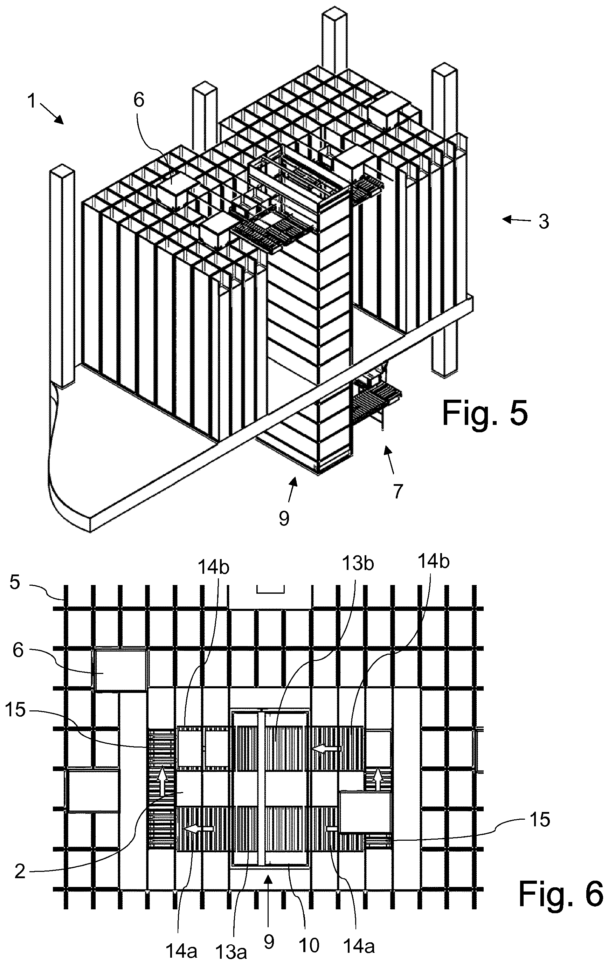

Fig. 5 zeigt in einer perspektivischen Schnittdarstellung ein Lagersystem 1 gemäß einem Ausführungsbeispiel der Erfindung mit einer Lagerbehälter-Hebevorrichtung 9, die in das Innere der Behälter-Lagerstrukturen 3 integriert ist, so dass diese allseitig von Lagersäulen 4 umgeben ist. Der Schnitt in der Zeichnung ist dabei so gewählt, dass sowohl die Lagerbehälter-Hebevorrichtung 9 als auch ein Arbeitsplatz 7, welcher unterhalb einer die Behälter-Lagerstruktur 3 tragenden Zwischendecke 12 eingerichtet ist, gut zu erkennen sind. Fig. 6 ist eine schematische Draufsicht auf das Lagersystem 1 nach Fig. 5.

Wie in Fig. 6 zu sehen ist, umfasst die Lagerbehälter-Hebevorrichtung 9 eine heb- und senkbare Hub-Plattform 10 zur Aufnahme von Lagerbehältern 2 für einen Vertikaltransport. In erfindungsgemäßer Weise ist die Hub-Plattform 10 derart eingerichtet, dass sie in einer Halteposition einerseits beförderte Lagerbehälter 2 abgibt und andererseits zu befördernde Lagerbehälter 2 aufnimmt. Konkret bedeutet dies, dass die Lagerbehälter-Hebevorrichtung 9, bspw. in einer Halteposition auf der Ebene des Arbeitsplatzes 7, einen oder mehrere von der obersten Ebene der Behälter-Lagerstruktur 3 nach unten beförderte Lagerbehälter 2 ausgibt und in dieser Halteposition gleich wieder einen oder mehrere neue Lagerbehälter 2 zur Beförderung auf die oberste Ebene der Behälter-Lagerstruktur 3 aufnimmt. Dementsprechend ist die Lagerbehälter-Hebevorrichtung 9 bei jeder Fahrt mit Lagerbehältern 2 bestückt und Leerfahrten werden vermieden. Dies bedeutet eine gesteigerte Effizienz, was die Handhabung der Lagerbehälter 2 anbelangt, und führt letztendlich zu einem leistungsstarken Lagerbetrieb.

In dem Ausführungsbeispiel gemäß den Fig. 5 und 6 umfasst die Hub-Plattform 10 eine erste Fördereinrichtung 13a und eine zweite Fördereinrichtung 13b, wobei die erste und die zweite Fördereinrichtung 13a, 13b umkehrbar bzw. reversibel einstellbare Förderrichtungen haben. In einer Ausführungsform erfolgt die Steuerung der Lagerbehälter-Hebevorrichtung 9 dabei wie folgt:
In einer Halteposition auf der Ebene des Arbeitsplatzes 7 ist die erste Fördereinrichtung 13a zur Aufnahme von Lagerbehältern 2 eingestellt (d.h. mit einer Förderrichtung von rechts nach links in der Darstellung gemäß Fig. 6). Die aufzunehmenden Lagerbehälter 2 werden dabei über eine entsprechende, in Fig. 5 zu erkennende Förderstrecke von dem Arbeitsplatz 7 zur Lagerbehälter-Hebevorrichtung 9 transportiert. In dem dargestellten Ausführungsbeispiel ist die Hub-Plattform 10 doppelttief ausgeführt, d.h. die Fördereinrichtung 13a kann zwei Lagerbehälter 2 aufnehmen. Einfachtiefe oder mehr als doppelttiefe Ausführungen sind ebenfalls möglich.

Gleichzeitig ist die zweite Fördereinrichtung 13b zur Abgabe von Lagerbehältern 2 eingestellt (d.h. mit einer Förderrichtung von links nach rechts in der Darstellung gemäß Fig. 6). Die abgegebenen Lagerbehälter 2 werden über eine entsprechende, in Fig. 5 nicht zu erkennende Förderstrecke von der Lagerbehälter-Hebevorrichtung 9 zu dem Arbeitsplatz 7 transportiert.

Mit den auf der ersten Fördereinrichtung 13a positionierten Lagerbehältern 2 führt die Lagerbehälter-Hebevorrichtung 9 sodann eine vertikale Hubbewegung von der Arbeitsplatz-Ebene zu einer Übergabe-Ebene in einem oberen Bereich der Behälter-Lagerstruktur 3 unterhalb der Gitterstruktur 5 aus.

Auf der Übergabe-Ebene sind insgesamt vier andienende Förderstrecken 14 angeordnet, die entweder in Richtung der Lagerbehälter-Hebevorrichtung 9 oder von dieser weg fördern. Jeweils zwei der vier andienenden Förderstrecken 14a, 14b korrespondieren paarweise mit den jeweiligen Fördereinrichtungen 13a, 13b. Dementsprechend können die auf der ersten Fördereinrichtung 13a positionierten, mittels der Lagerbehälter-Hebevorrichtung 9 auf die Übergabe-Ebene gehobenen Lagerbehälter 2 über die Förderstrecken 14a nach links oder nach rechts ausgegeben und sodann von den Transportrobotern 6 übernommen werden. Damit mehrere Transportroboter 6 gleichzeitig Lagerbehälter 2 von den Förderstrecken 14a, 14b aufnehmen bzw. an diese übergeben können, sind die Förderstrecken 14a, 14b endseitig jeweils mittels einer orthogonal ausgerichteten Förderstrecke 15 miteinander verbunden.

Gleichzeitig können über die Förderstrecken 14b sowohl von links als auch von rechts Lagerbehälter 2, die zur Arbeitsplatz-Ebene abgesenkt werden sollen, auf die zweite Fördereinrichtung 13b der Hub-Plattform 10 befördert werden. Mit diesen auf der zweiten Fördereinrichtung 13b positionierten Lagerbehältern 2 führt die Lagerbehälter-Hebevorrichtung 9 sodann eine Abwärtsbewegung zur Arbeitsplatz-Ebene aus. Dort angekommen wiederholt sich der Fortgang wie oben beschrieben.

Es sei angemerkt, dass die Übergabe-Ebene einerseits in vorteilhafter Weise möglichst nah unterhalb der Gitterstruktur 5 angeordnet ist, um den Vorgang der Übergabe von Lagerbehältern 2 an die bzw. von den Transportroboter(n) 6 zu vereinfachen. Anderseits muss die Übergabe-Ebene so tief angeordnet sein, dass auf den Förderstrecken 14a, 14b und 15 der Übergabe-Ebene aufliegende Lagerbehälter 2 vollständig unterhalb der Gitterstruktur 5 liegen, so dass sich die Transportroboter 6 - abgesehen von der über die Gitterstruktur 5 hinausragenden Lagerbehälter-Hebevorrichtung 9 - frei auf der Gitterstruktur 5 bewegen können.

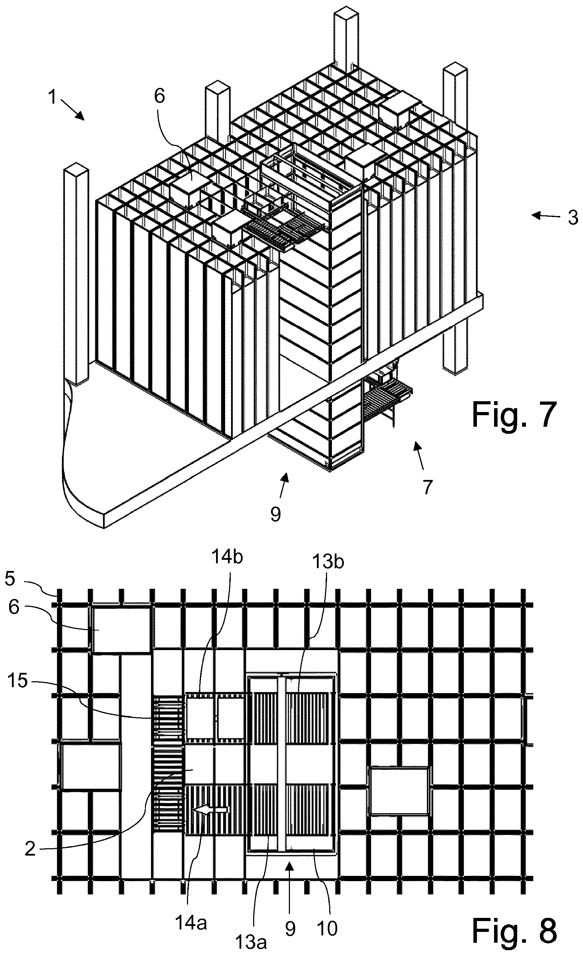

Die Fig. 7 und 8 zeigen ein ähnliches Lagersystem 1 wie die Fig. 5 und 6. Im Unterschied zu dem zuvor beschriebenen Ausführungsbeispiel sind die Förderstrecken 14a, 14b und 15 der Übergabe-Ebene jedoch nur auf einer Seite der Lagerbehälter-Hebevorrichtung 9 angeordnet, sodass die erste Fördereinrichtung 13a der Hub-Plattform 10 Lagerbehälter 2 nur nach links (bezogen auf die Darstellung in Fig. 8) ausschleusen kann und die zweite Fördereinrichtung 13b der Hub-Plattform 10 Lagerbehälter 2 nur von links aufnehmen kann. Mit einer solchen einseitigen Anordnung lassen sich zwar nur geringere Leistungen erzielen als mit einer Anordnung gemäß den Fig. 5 und 6. Andererseits ist der Verlust von Lagerplätzen innerhalb der Behälter-Lagerstruktur 3 gegenüber einer Anordnung gemäß den Fig. 5 und 6 deutlich reduziert.

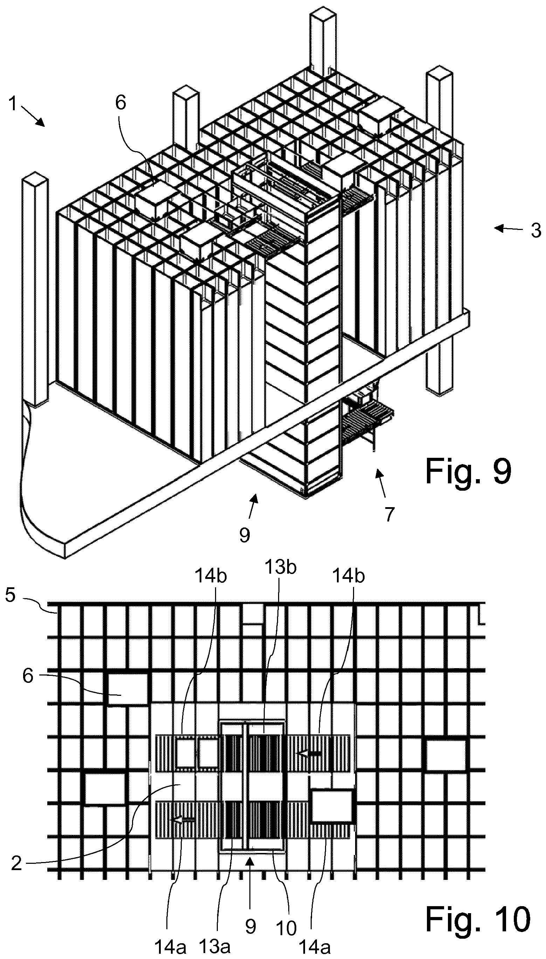

Die Fig. 9 und 10 zeigen ein Lagersystem 1 ähnlich dem der Fig. 5 und 6, wobei anstelle der als Querverbindung ausgeführten Förderstrecke 15 verlängerte andienende Förderstrecken 14a, 14b vorgesehen sind. Diese bieten jeweils drei Abstellplätze für Lagerbehälter 2, so dass mehrere Transportroboter 6 gleichzeitig Lagerbehälter 2 auf den Förderstrecken 14a, 14b abstellen können.

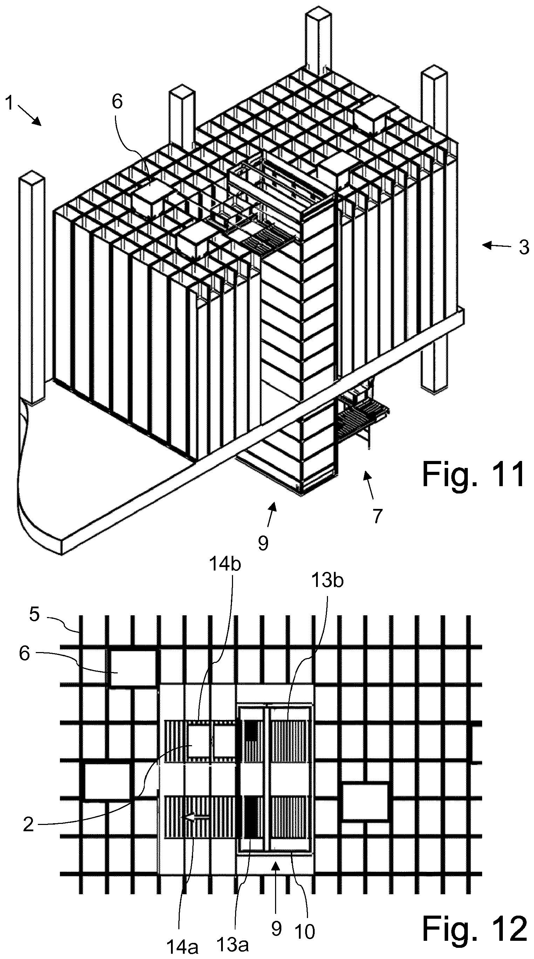

Die Fig. 11 und 12 zeigen im Wesentlichen das gleiche Lagersystem 1 wie die Fig. 9 und 10, allerdings wiederum mit nur einseitig andienenden Förderstrecken 14a, 14b und einer dementsprechend erhöhten Lagerkapazität.

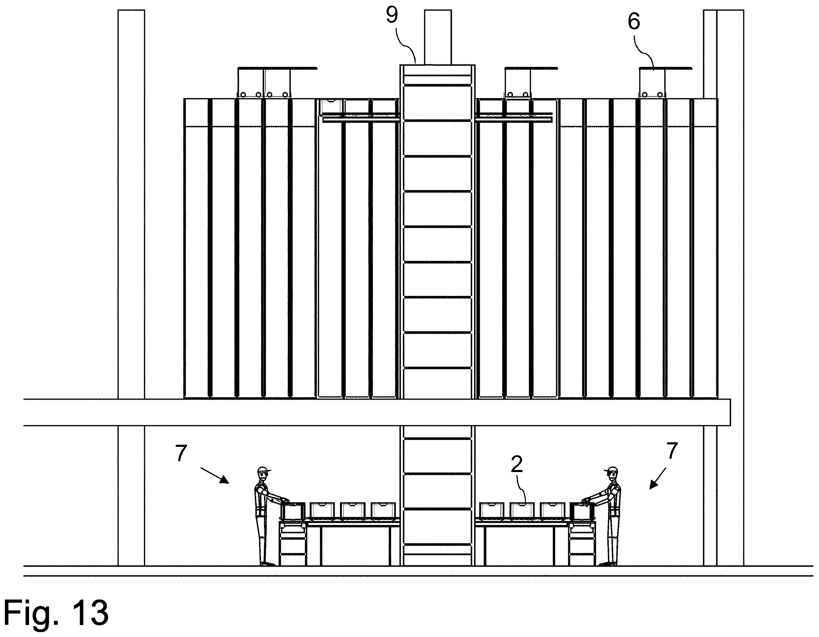

Die Fig. 13, 14 und 15 zeigen in unterschiedlichen Perspektiven ein Lagersystem 1 gemäß einem Ausführungsbeispiel der Erfindung, wobei im Unterschied zu den zuvor beschriebenen Ausführungsbeispielen eine Lagerbehälter-Hebevorrichtung 9 zwei Arbeitsplätze 7 gleichzeitig bedient. Die beiden Arbeitsplätze 7 sind auf gegenüberliegenden Seiten der Lagerbehälter-Hebevorrichtung 9 angeordnet. Die Lagerbehälter-Hebevorrichtung 9 weist, wie im Zusammenhang mit den Fig. 5 und 6 im Detail beschrieben, eine Hub-Plattform 10 mit einer ersten und einer zweiten Fördereinrichtung 13a, 13b auf.

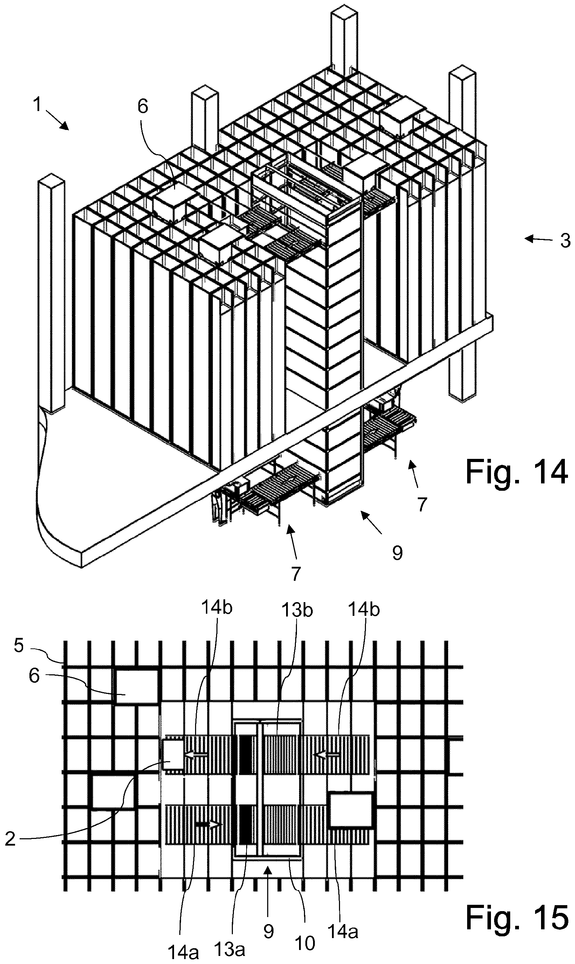

Jeder Arbeitsplatz 7 weist zwei Förderstrecken auf, wobei jeweils eine der beiden Förderstrecken eingerichtet ist, Lagerbehälter 2 zu der Lagerbehälter-Hebevorrichtung 9 hin zu transportieren, während die jeweils andere Förderstrecke mit umgekehrter Förderrichtung betrieben wird. Wie besonders gut in Fig. 14 zu erkennen ist, haben dabei diejenigen Förderstrecken, die unmittelbar einander gegenüberliegen und dementsprechend mit derselben Fördereinrichtung 13a, 13b der Hub-Plattform 10 der Lagerbehälter-Hebevorrichtung 9 korrespondieren, jeweils die gleiche Förderrichtung.

Dementsprechend lassen sich "Doppelspiele" derart realisiert, dass in einer Halteposition der Lagerbehälter-Hebevorrichtung 9 auf der Arbeitsplatz-Ebene an einem Paar der einander gegenüberliegenden Förderstrecken über die erste Fördereinrichtung 13a Lagerbehälter 2 an einen der Arbeitsplätze 7 ausgegeben werden, während gleichzeitig über die erste Fördereinrichtung 13a Lagerbehälter 2 von dem anderen der Arbeitsplätze 7 aufgenommen werden. Darüber hinaus kann gleichzeitig an dem jeweiligen anderen Paar der einander gegenüberliegenden Förderstrecken der Arbeitsplätze 7 der Vorgang umgekehrt ablaufen. Folglich können bei jeder Fahrt der Lagerbehälter-Hebevorrichtung 9 stets beide Fördereinrichtungen 13a, 13b mit Lagerbehältern 2 besetzt sein, so dass im Ergebnis ein besonders leistungsstarkes Lagersystem realisiert ist.

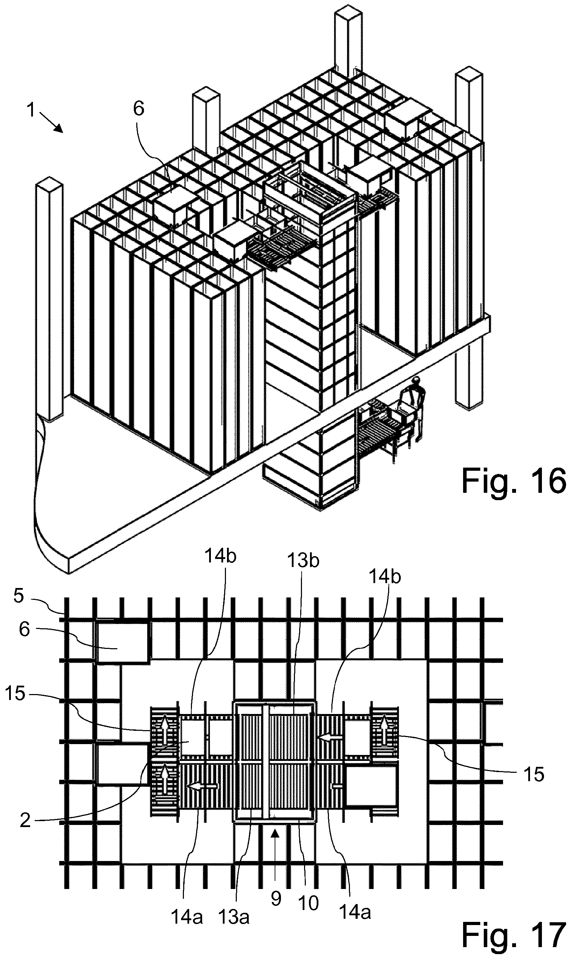

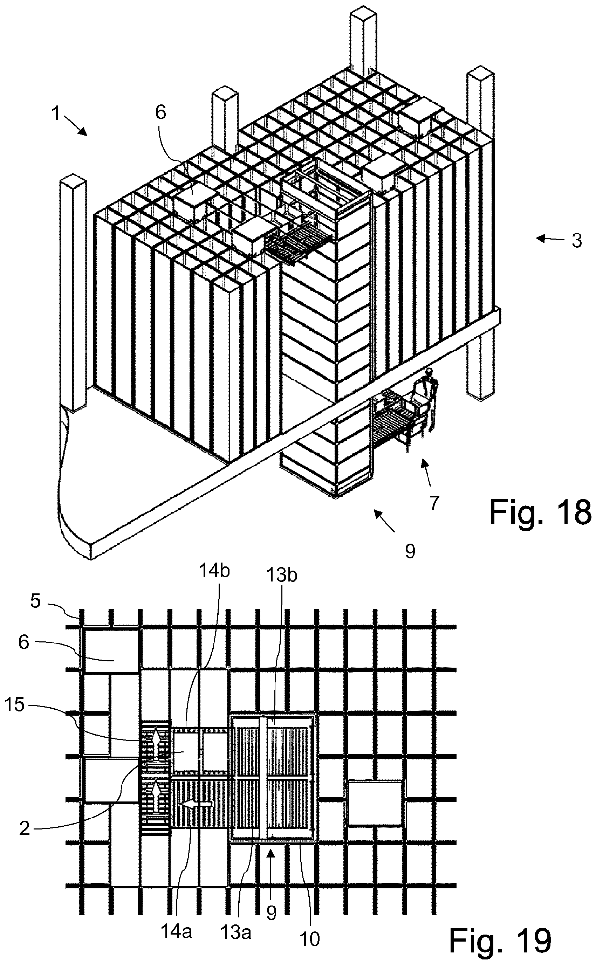

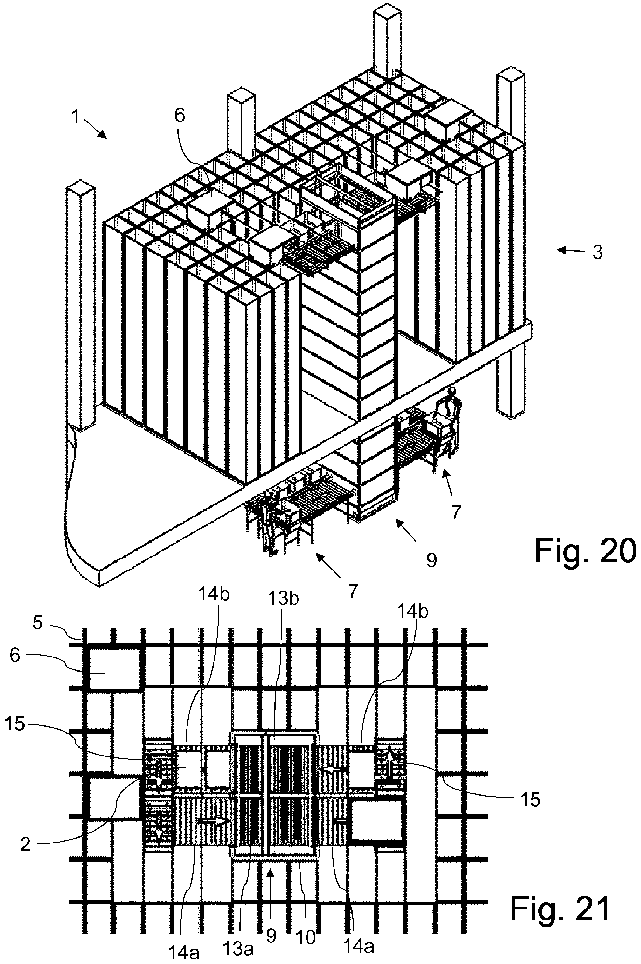

Die Fig. 16 und 17, 18 und 19 sowie 20 und 21 zeigen, jeweils in einer perspektivischen Schnittdarstellung und einer Draufsicht, Lagersysteme 1 mit unterschiedlichen Anordnungen der Förderstrecken 14a, 14b und 15 auf der oberen Übergabe-Ebene bzw. mit unterschiedlichen Steuerungen der Förderrichtungen (angezeigt durch die entsprechenden Pfeile in den Figuren) gemäß weiteren Ausführungsbeispielen der Erfindung.

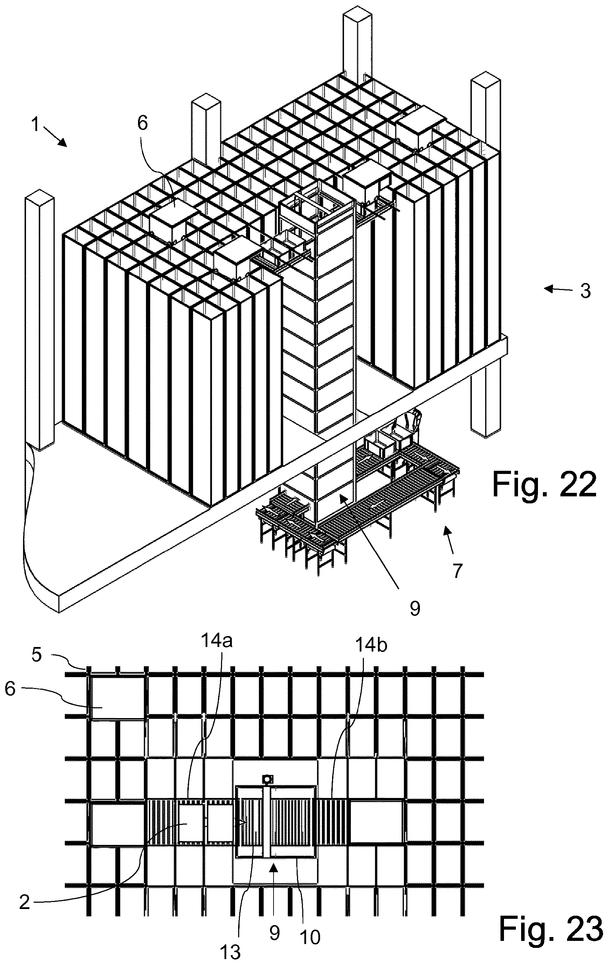

Die Fig. 22 und 23 zeigen in einer perspektivischen Schnittdarstellung bzw. einer Draufsicht ein Lagersystem 1 gemäß einem Ausführungsbeispiel der Erfindung, bei der die Besonderheit darin besteht, dass die Hub-Plattform 10 der Lagerbehälter-Hebevorrichtung 9 nicht wie in den zuvor beschriebenen Ausführungsbeispielen zwei Fördereinrichtungen 13a, 13b, sondern lediglich eine einzige Fördereinrichtung 13 aufweist. Entsprechend sind auf der oberen Übergabe-Ebene nur zwei Förderstrecken 14a, 14b vorgesehen, die jeweils auf gegenüberliegenden Seiten der Lagerbehälter-Hebevorrichtung 9 angeordnet sind. Im Vergleich zu den zuvor beschriebenen Ausführungsbeispielen bietet eine derartige Anordnung bei zwar geringfügig reduzierter Leistung den Vorteil, dass die Lagerkapazität erhöht ist, da durch die schmaler bauende Mimik der Übergabe-Ebene weniger Lagerplätze verloren gehen.

In dieser Anordnung wird die Lagerbehälter-Hebevorrichtung 9 derart gesteuert, dass die Fördereinrichtung 13 bei Erreichen der oberen Übergabe-Ebene die jeweils transportierten Lagerbehälter 2 in eine Richtung ausschleust (in der Darstellung gemäß Fig. 23 bspw. nach rechts auf die Förderstrecke 14b), während die Fördereinrichtung 13 im gleichen Zuge von der jeweils anderen Richtung (d.h. bspw. von der Förderstrecke 14a von links) Lagerbehälter 2 aufnimmt, die zu dem Arbeitsplatz 7 nach unten befördert werden müssen. Auf der Ebene des Arbeitsplatzes 7 erfordert die beschriebene Anordnung eine etwas kompliziertere Mimik. Diese kann bspw., wie in Fig. 22 gezeigt, "loopförmig" als umlaufende Förderstrecke ausgebildet sein, die auf der einen Seite der Lagerbehälter-Hebevorrichtung 9 ausgegebene Lagerbehälter 2 nach deren Bearbeitung, bspw. im Rahmen einer Kommissionierung, auf die andere Seite der Lagerbehälter-Hebevorrichtung 9 transportiert. Von dort kann die Fördereinrichtung 13 die Lagerbehälter 2 in der beschriebenen Art und Weise aufnehmen, und die Lagerbehälter 2 können mit der Lagerbehälter-Hebevorrichtung 9 wieder auf die obere Übergabe-Ebene angehoben werden.

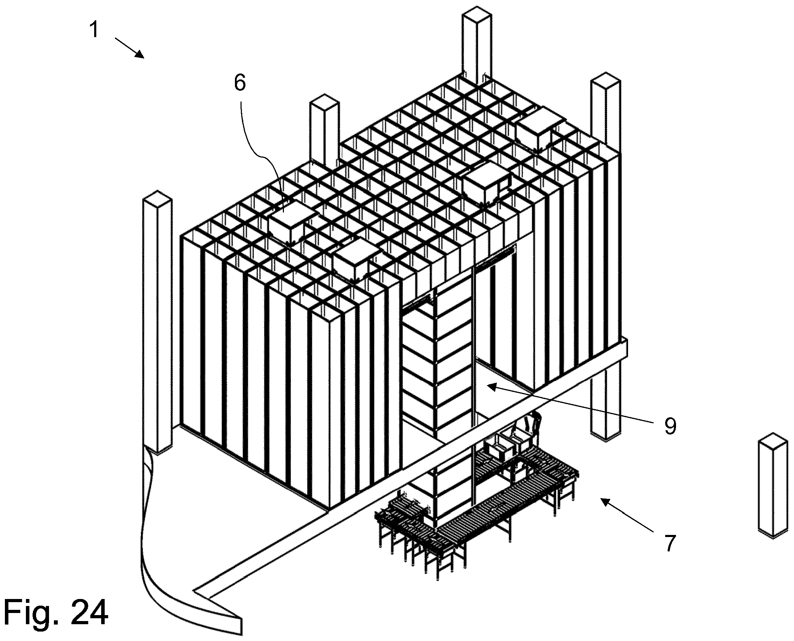

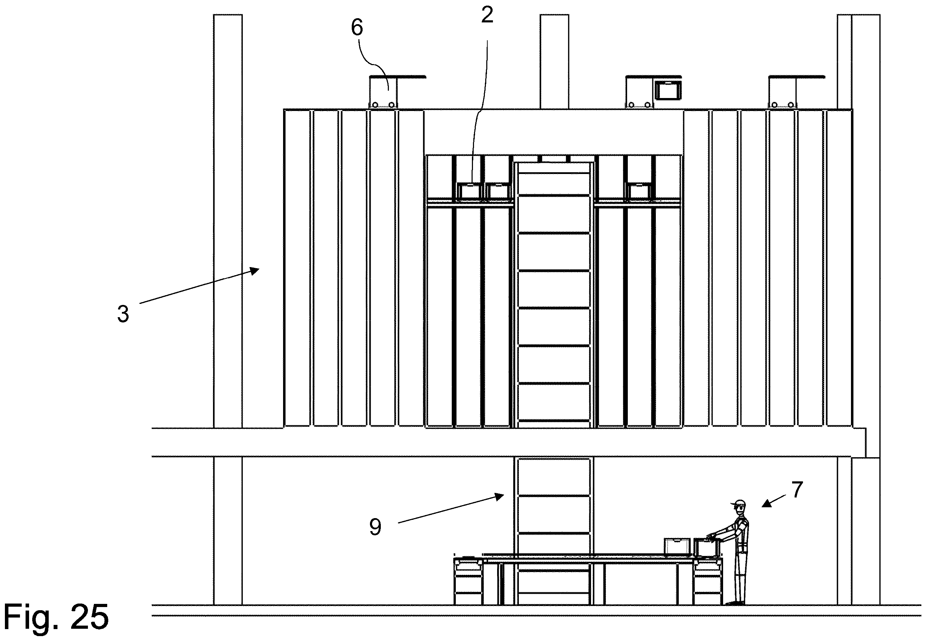

Die Fig. 24 und 25 zeigen in einer perspektivischen Schnittdarstellung bzw. einer Seitenansicht ein Lagersystem 1 gemäß einem Ausführungsbeispiel der Erfindung. Ein Arbeitsplatz 7 ist unterhalb einer die Behälter-Lagerstruktur 3 tragenden Zwischendecke 12 eingerichtet, wobei der Arbeitsplatz 7, wie in Zusammenhang mit dem Ausführungsbeispiel gemäß Fig. 22 im Detail beschrieben, "loopförmig" mit einer umlaufenden Förderstrecke ausgebildet ist.

Das besondere Merkmal des Lagersystems 1 gemäß den Fig. 24 und 25 besteht darin, dass die obere Übergabe-Ebene niedriger angeordnet ist als in den zuvor beschriebenen Ausführungsbeispielen, wie insbesondere in Fig. 25 gut zu erkennen ist. Konkret ist die Übergabe-Ebene in Relation zu der Behälter-Lagerstruktur 3 so niedrig angeordnet, dass die Lagerbehälter-Hebevorrichtung 9 insgesamt unterhalb der Gitterstruktur 5 liegt, d.h. keine ihrer Komponenten die Gitterstruktur 5 überragt. Diese Anordnung hat zur Folge, dass die Zeitdauer, die ein Transportroboter 6 benötigt, um einen Lagerbehälter 2 auf der Übergabe-Ebene abzusetzen bzw. einen Lagerbehälter 2 von der Übergabe-Ebene aufzunehmen, länger ist als in den zuvor beschriebenen Ausführungsbeispielen. Allerdings steht diesem Nachteil der Vorteil gegenüber, dass die Gitterstruktur 5 durchgängig ausgebildet sein kann und die Transportroboter 6 auf der Gitterstruktur 5 vollkommen frei operieren können, ohne irgendwelche durch die Gitterstruktur 5 hindurchragenden Lagerbehälter-Hebevorrichtungen 9 umfahren zu müssen.

Abschließend sei angemerkt, dass spezifische Merkmale von zuvor beschriebenen Ausführungsbeispielen mit spezifischen Merkmalen von jeweiligen anderen der zuvor beschriebenen Ausführungsbeispiele kombiniert werden können, sofern sich diese nicht gegenseitig ausschließen oder sich hinsichtlich ihrer Funktionalität beeinträchtigen.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken. Vielmehr wird der Schutzbereich der Erfindung durch die Ansprüche bestimmt.

## Patentansprüche

1. Lagersystem zum Lagern von Behältern, umfassend:
eine Gitterstruktur (5) mit einer Vielzahl von Gitterzellen, wobei jede Gitterzelle eine Lagersäule (4) einer unterhalb der Gitterstruktur (5) angeordneten Behälter-Lagerstruktur (3) definiert, wobei die Lagersäulen (4) eingerichtet sind, jeweils einen vertikalen Stapel von Lagerbehältern (2) aufzunehmen,
mindestens einen zur Fortbewegung auf der Gitterstruktur (5) ausgebildeten Transportroboter (6) zur Handhabung der Lagerbehälter (2), wobei der Transportroboter (6) Mittel zum Aufnehmen, Transportieren und Absetzen von in der Behälter-Lagerstruktur (3) gelagerten Lagerbehältern (2) umfasst, sowie
mindestens eine Lagerbehälter-Hebevorrichtung (9) mit einer heb- und senkbaren Hub-Plattform (10) zum vertikalen Befördern von Lagerbehältern (2), mindestens eine Arbeitsplatz-Ebene mit einem als Beladestation und/oder als Kommissionierstation ausgeführten Arbeitsplatz (7) und mindestens eine Übergabe-Ebene zur Übergabe von Lagerbehältern (2) von der Behälter-Lagerstruktur (3) an die Lagerbehälter-Hebevorrichtung (9) sowie von der Lagerbehälter-Hebevorrichtung (9) an die Behälter-Lagerstruktur (3), wobei die Lagerbehälter-Hebevorrichtung (9) die Arbeitsplatz-Ebene mit der Übergabe-Ebene verbindet und wobei die Hub-Plattform (10) eingerichtet ist, in einer Halteposition auf der mindestens einen Übergabe-Ebene einerseits beförderte Lagerbehälter (2) abzugeben und andererseits zu befördernde Lagerbehälter (2) aufzunehmen,
wobei auf der mindestens einen Übergabe-Ebene Fördereinrichtungen (14a, 14b) vorgesehen sind, die zur Aufnahme von Lagerbehältern (2) von der Lagerbehälter-Hebevorrichtung (9) oder zur Abgabe von Lagerbehältern (2) an die Lagerbehälter-Hebevorrichtung (9) ausgeführt sind.

2. Lagersystem nach Anspruch 1, wobei eine Lagerbehälter-Hebevorrichtung (9) an einer Außenseite der Behälter-Lagerstruktur (3) angeordnet ist.

3. Lagersystem nach Anspruch 1 oder 2, wobei eine Lagerbehälter-Hebevorrichtung (9) im Inneren der Behälter-Lagerstruktur (3) angeordnet ist.

4. Lagersystem nach einem der Ansprüche 1 bis 3, wobei die Hub-Plattform (10) eine erste Fördereinrichtung (13a) und eine zweite Fördereinrichtung (13b) aufweist, wobei die erste und die zweite Fördereinrichtung (13a, 13b) gegenläufige Förderrichtungen derart haben, dass eine der Fördereinrichtungen (13a; 13b) zur Aufnahme und die jeweilige andere der Fördereinrichtungen (13b; 13a) zur Abgabe von Lagerbehältern (2) eingerichtet ist.

5. Lagersystem nach Anspruch 4, wobei die erste Fördereinrichtung (13a) und die zweite Fördereinrichtung (13b) derart ausgeführt sind, dass sie jeweils Platz für zwei oder mehrere in Förderrichtung hintereinander angeordnete Lagerbehälter (2) bieten.

6. Lagersystem nach Anspruch 4 oder 5, wobei die Hub-Plattform (10) doppelstöckig mit einer unteren Ebene und einer oberen Ebene ausgeführt ist, wobei die erste Fördereinrichtung (13a) und die zweite Fördereinrichtung (13b) jeweils einer der Ebenen zugeordnet sind.

7. Lagersystem nach einem der Ansprüche 1 bis 6, wobei eine Übergabe-Ebene in einer Ebene entsprechend der obersten Lagerebene der Behälter-Lagerstruktur (3) unterhalb der Gitterstruktur (5) angeordnet ist.

8. Lagersystem nach einem der Ansprüche 1 bis 6, wobei eine Übergabe-Ebene in einer tiefer liegenden Ebene als die oberste Lagerebene der Behälter-Lagerstruktur (3) angeordnet ist, und
wobei die Lagerbehälter-Hebevorrichtung (9) derart ausgeführt ist, dass ein oberer Abschluss der Lagerbehälter-Hebevorrichtung (9) unterhalb der Gitterstruktur (5) liegt.

9. Lagersystem nach einem der Ansprüche 1 bis 8, wobei eine Übergabe-Ebene doppelstöckig ausgeführt ist und eine untere Ebene und eine obere Ebene aufweist, wobei eine der Ebenen zur Übergabe von Lagerbehältern (2) von der Behälter-Lagerstruktur (3) an die Lagerbehälter-Hebevorrichtung (9) und die jeweils andere der Ebenen zur Übergabe von Lagerbehältern (2) von der Lagerbehälter-Hebevorrichtung (9) an die Behälter-Lagerstruktur (3) eingerichtet sind.

10. Lagersystem nach einem der Ansprüche 1 bis 9, wobei andienende Fördereinrichtungen (14a, 14b) beidseits der Lagerbehälter-Hebevorrichtung (9) vorgesehen sind.

11. Lagersystem nach einem der Ansprüche 1 bis 10, wobei insgesamt vier andienende Fördereinrichtungen (14a, 14b) vorgesehen sind, die paarweise auf jeweils gegenüberliegenden Seiten der Lagerbehälter-Hebevorrichtung (9) angeordnet sind.

12. Lagersystem nach Anspruch 11, wobei die jeweiligen auf derselben Seite der Lagerbehälter-Hebevorrichtung (9) angeordneten andienenden Fördereinrichtungen (14a, 14b) über eine zusätzliche quer verlaufende Fördereinrichtung (15) miteinander in Verbindung stehen.

## Claims

1. Storage system for storing containers, comprising:
a grid structure (5) having a large number of grid cells, wherein each grid cell defines a storage column (4) of a container storage structure (3) which is arranged below the grid structure (5), wherein the storage columns (4) are configured to receive a vertical stack of storage containers (2) in each case,
at least one transport robot (6) which is constructed for movement on the grid structure (5) for handling the storage containers (2), wherein the transport robot (6) comprises means for receiving, transporting and depositing storage containers (2) stored in the container storage structure (3), and
at least one storage container lifting apparatus (9) having a lifting platform (10) which can be raised and lowered for vertically conveying storage containers (2),
at least one working space plane having a working space (7) which is in the form of a loading station and/or a picking station, and at least one transfer plane for transferring storage containers (2) from the container storage structure (3) to the storage container lifting apparatus (9) and from the storage container lifting apparatus (9) to the container storage structure (3),
wherein the storage container lifting apparatus (9) connects the working space plane to the transfer plane and wherein the lifting platform (10) is configured, in a retention position on the at least one transfer plane, on the one hand, to discharge storage containers (2) which are conveyed and, on the other hand, to receive storage containers (2) which are intended to be conveyed,
wherein on the at least one transfer plane there are provided conveying devices (14a, 14b) which are configured to receive storage containers (2) from the storage container lifting apparatus (9) or to discharge storage containers (2) to the storage container lifting apparatus (9).

2. Storage system according to claim 1, wherein a storage container lifting apparatus (9) is arranged at an outer side of the container storage structure (3).

3. Storage system according to claim 1 or 2, wherein a storage container lifting apparatus (9) is arranged inside the container storage structure (3).

4. Storage system according to any one of claims 1 to 3, wherein the lifting platform (10) has a first conveying device (13a) and a second conveying device (13b), wherein the first and the second conveying device (13a, 13b) have opposing conveying directions so that one of the conveying devices (13a; 13b) is configured to receive and the respective other one of the conveying devices (13b; 13a) is configured to discharge storage containers (2).

5. Storage system according to claim 4, wherein the first conveying device (13a) and the second conveying device (13b) are configured in such a manner that they each provide space for two or more storage containers (2) which are arranged in a conveying direction one behind the other.

6. Storage system according to claim 4 or 5, wherein the lifting platform (10) is configured on two levels with a lower plane and an upper plane, wherein the first conveying device (13a) and the second conveying device (13b) are each associated with one of the planes.

7. Storage system according to any one of claims 1 to 6, wherein a transfer plane is arranged in a plane in accordance with the uppermost storage plane of the container storage structure (3) below the grid structure (5).

8. Storage system according to any one of claims 1 to 6, wherein a transfer plane is arranged in a lower plane than the uppermost storage plane of the container storage structure (3), and
wherein the storage container lifting apparatus (9) is configured in such a manner that an upper closure of the storage container lifting apparatus (9) is located below the grid structure (5).

9. Storage system according to any one of claims 1 to 8, wherein a transfer plane is configured with two levels and has a lower plane and an upper plane, wherein one of the planes is configured to transfer storage containers (2) from the container storage structure (3) to the storage container lifting apparatus (9) and the other one of the planes in each case is configured to transfer storage containers (2) from the storage container lifting apparatus (9) to the container storage structure (3).

10. Storage system according to any one of claims 1 to 9, wherein tendering conveying devices (14a, 14b) are provided at both sides of the storage container lifting apparatus (9).

11. Storage system according to any one of claims 1 to 10, wherein there are provided a total of four tendering conveying devices (14a, 14b) which are arranged in pairs at opposing sides of the storage container lifting apparatus (9).

12. Storage system according to claim 11, wherein the respective tendering conveying devices (14a, 14b) which are arranged at the same side of the storage container lifting apparatus (9) are connected to each other by means of an additional conveying device (15) which extends transversely.

## Revendications

1. Système de stockage pour le stockage de récipients, comprenant :
une structure de grille (5) avec une pluralité de cellules de grilles, dans lequel chaque cellule de grille délimite une colonne de stockage (4) d'une structure de stockage de récipients (3) disposée en dessous de la structure de grille (5), dans lequel les colonnes de stockage (4) sont conçues pour loger chacune un empilement vertical de récipients de stockage (2),
au moins un robot de transport (6), conçu pour un déplacement sur la structure de grille (5), pour la manipulation des récipients de stockage (2), dans lequel le robot de transport (6) comprend des moyens pour le logement, le transport et le dépôt des récipients de stockage (2) stockés dans la structure de stockage de récipients (3) ainsi que
au moins un dispositif de levage de récipients de stockage (9) avec une plate-forme de levage et d'abaissement (10) pour le convoyage vertical des récipients de stockage (2),
au moins un niveau de poste de travail avec un poste de travail (7) conçu comme une station de chargement et/ou une station de préparation de commandes, et au moins un niveau de transfert pour le transfert des récipients de stockage de la structure de stockage de récipients (3) vers le dispositif de levage de récipients de stockage (9) ainsi que du dispositif de levage de récipients de stockage (9) vers la structure de stockage de récipients (3),
dans lequel le dispositif de levage de récipients de stockage (9) relie le niveau de poste de travail avec le niveau de transfert et dans lequel la plate-forme de levage (10) est conçue, d'une part, pour déposer les récipients de stockage (2) sur l'au moins un niveau de transfert dans une position de maintien et, d'autre part, pour loger des récipients de stockage (2) à convoyer,
dans lequel, sur l'au moins un niveau de transfert, sont prévus des dispositifs de convoyage (14a, 14b) qui sont conçus pour la prise en charge des récipients de stockage (2) par le dispositif de levage de récipients de stockage (9) ou pour le dépôt des récipients de stockage (2) sur le dispositif de levage de récipients de stockage (9).

2. Système de stockage selon la revendication 1, **caractérisé en ce qu'**un dispositif de levage de récipients de stockage (9) est disposé sur un côté extérieur de la structure de stockage de récipients (3).

3. Système de stockage selon la revendication 1 ou 2, **caractérisé en ce qu'**un dispositif de levage de récipients de stockage (9) est disposé à l'intérieur de la structure de stockage de récipients (3).

4. Système de stockage selon l'une des revendications 1 à 3, dans lequel la plate-forme de levage (10) comprend un premier dispositif de convoyage (13a) et un deuxième dispositif de convoyage (13b), dans lequel les premier et deuxième dispositifs de convoyage (13a, 13b) présentent des directions de convoyages opposées, de sorte qu'un des dispositifs de convoyage (13a ; 13b) est conçu pour la prise en charge et l'autre dispositif de convoyage (13b ; 13a) est conçu pour le dépôt des récipients de stockage (2).

5. Système de stockage selon la revendication 4, dans lequel le premier dispositif de convoyage (13a) et le deuxième dispositif de convoyage (13b) sont conçus de sorte qu'ils offrent chacun de la place pour deux ou plus récipients de stockage (2) disposées les uns derrière les autres.

6. Système de stockage selon la revendication 4 ou 5, dans lequel la plate-forme de levage (10) est réalisée en deux étages avec un niveau inférieur et un niveau supérieur, dans lequel le premier dispositif de convoyage (13a) et le deuxième dispositif de convoyage (13b) correspondent chacun à un des niveaux.

7. Système de stockage selon l'une des revendications 1 à 6, dans lequel un niveau de transfert est disposé dans un niveau correspondant au niveau de stockage le plus élevé de la structure de stockage de récipients (3) en dessous de la structure de grille (5).

8. Système de stockage selon l'une des revendications 1 à 6, dans lequel un niveau de transfert est disposé dans un niveau plus bas que le niveau de stockage le plus élevé de la structure de stockage de récipients (3),
dans lequel le dispositif de levage de récipients de stockage (9) est conçu de sorte qu'une extrémité supérieure du dispositif de levage de récipients de stockage (9) se trouve en dessous de la structure de grille (5).

9. Système de stockage selon l'une des revendications 1 à 8, dans lequel un niveau de transfert est réalisé sur deux étages et comprend un niveau inférieur et un niveau supérieur, dans lequel un des niveaux est conçu pour le transfert des récipients de stockage (2) de la structure de stockage de récipient (3) vers le dispositif de levage de récipients de stockage (9) et l'autre niveau est conçu pour le transfert des récipients de stockage (2) du dispositif de levage de récipients de stockage (9) vers la structure de stockage de récipient (3).

10. Système de stockage selon l'une des revendications 1 à 9, dans lequel des dispositifs de convoyage (14a, 14b) sont prévus des deux côtés du dispositif de levage de récipients de stockage (9).

11. Système de stockage selon l'une des revendications 1 à 10, dans lequel, au total quatre dispositifs de convoyage (14a, 14b) sont prévus, qui sont disposés par paires sur des côtés respectivement opposés du dispositif de levage de récipients de stockage (9).

12. Système de stockage selon la revendication 11, dans lequel les dispositifs de convoyage (14a, 14b) disposés sur le même côté du dispositif de levage de récipients de stockage (9) sont reliés entre eux par l'intermédiaire d'un dispositif de convoyage (15) supplémentaire à déplacement transversal.
